# EUROPEAN PATENT APPLICATION

(11) **EP 3 702 627 A1**
(43) Date of publication of application: **02.09.2020**
(21) Application number: 19217708.7
(22) Date of filing: 18.12.2019
(51) Int. Cl.: F15B 11/08, F15B 13/02

(54) **CONTROL DEVICE**

(30) Priority: 07.01.2019 IT 201900000121
(71) Applicant: P.M. Servizi S.R.L., 41012 Carpi (MO) (IT)
(72) Inventor: COLAIUDA, Mauro, 41033 Concordia sulla secchia (MO) (IT); PANAROTTO, Elena, 28100 Novara (NO) (IT)
(74) Representative: Savini, Stefania

(57) **Abstract**

A control device (1) arranged for controlling the raising or lowering of a frame element of a container, the control device (1) comprising a circuit (15) for the passage of an operating fluid, an actuator (2) intended for receiving the operating fluid to raise or lower the frame element, and a valve (3) arranged for supplying the operating fluid to a first chamber (6) or to a second chamber (7) of the actuator (2) to extend or retract a stem (4) connected to the frame element, the control device (1) further comprising a supply pump (8) arranged for supplying the pressurized operating fluid to the valve (3) from a tank (9), the circuit (15) comprising conduit means (48), arranged for connecting the valve (3) to the supply pump (8), a first hydraulic line (49) connected to a first outlet (18) of the valve (3) and intended for connecting the valve (3) to the first chamber (6) of the actuator (2) and a second hydraulic line (50) connected to a second outlet (20) of the valve (3) and intended for connecting the valve (3) to the second chamber (7) of the actuator (2). The control device (1) further comprises distributing valve means (44) connected to the first chamber (6) and to the second chamber (7) and a manual pump (10) connected to the distributing valve means (44).

The valve (3) comprises:
- a body (14) in which a first hole (16) is obtained comprising a first end (17) near which the first outlet (18) and a second end (19) are obtained, opposite the first end (17), near which the second outlet (20) is obtained, the first outlet (18) and the second outlet (20) enabling the pressurized operating fluid to exit the valve (3);
- in the body (14) a second hole (21) being further obtained that is connected to the first hole (16) and comprising a first end portion (22) near which an inlet (23) is obtained that enables the pressurized operating fluid to enter the valve (3); and
- a shutter element (40) arranged inside the first hole (16) and movable therein between an inactive position (I) in which the shutter element (40) does not prevent the transit of the operating fluid from the first hole (16) to the first outlet (18) and/or to the second outlet (20) and an engaged position in which it alternatively occludes the first outlet (18) or the second outlet (20) by coupling with portions of inner walls of the first hole (16) arranged near the first outlet (18) or the second outlet (20).

## Description

The invention relates to a control device intended for controlling the opening or the closing of a container by raising or lifting a frame element of the container, for example a lid.

The container is, in particular, a container in which waste is deposited and placed in waste collection centres or at companies.

From the prior art, it is known to provide a container, for example a container intended for accommodating waste, of a single or dual effect hydraulic pump, driven manually to raise/lower a lid with which the container is provided in order to respectively open/close the container to enable waste to be introduced and/or discharged. This pump is connected to an actuator, for example a single-effect piston, in particular hydraulically driven, connected on one side to a side wall of a frame of the container and on the other side to the lid of the container. A hydraulic circuit is further provided in which a fluid is flowable that is supplied from a tank via the manual pump to be conveyed to the single-effect piston.

When it is necessary to open the container, i.e. raise the lid, an operator acts manually on an arm of the pump by pulling the arm upwards and downwards, such that the fluid can be pumped to the piston so as to permit an extension of a stem of the piston. Extending the stem of the piston causes the lid of the container to be raised, inasmuch as the stem drags the lid with itself.

When on the other hand it is necessary to close the container, i.e. lower the lid, the operator discharges the manual pump, if it is single effect, or drives the pump if it is dual effect. Consequently, the pressure inside the hydraulic circuit is lowered, which enables the stem to return to the original position, dragging with itself the lid of the container and lowering the lid accordingly.

One drawback of the prior art manual drive control devices associated with a container is that the manual drive requires a long work time to raise/lower the lid.

A further drawback of the manual drive control devices of the prior art associated with a container is that raising the lid requires a large expenditure of physical energy by the operator, the operator having to concentrate force to enable the fluid to arrive from the tank to the actuator by means of the manual pump. For this reason, manual driving of the pumps of known control devices is very tiring for the operator who has to perform the manual driving.

Alternatively to the aforesaid manual drive pumps, electric pumps or hydropneumatic pumps could be used in control devices associated with a waste container.

Nevertheless, one drawback of electric pumps and hydropneumatic pumps associated with containers is that they are subject to wear by atmospheric agents inasmuch as the containers are often left in the open air without being placed in a shed or below an awning.

Another drawback of electric pumps and of the hydropneumatic pumps associated with a container is that they are very expensive and can be an easy object of theft inasmuch as the containers are often not placed in a shed and surveillance systems are not provided in the places in which they are placed.

CN108533823 A discloses a hydraulically controlled ball valve system comprising a four-way solenoid valve arranged for supplying oil to a first chamber or to a second chamber of a hydraulic cylinder.

One object of the invention is to improve known control devices.

Another object of the invention is to provide a control device that provides an easy drive for an operator, so as not to entail physical effort for the operator.

A further object of the invention is to provide a control device that permits rapid raising/lowering of a frame element of the container with which the control device is associated.

A still further object of the invention is to provide a control device that provides a simple and cheap installation on a container of known type, without significant constructional adaptations having to be made to the already existing containers.

The aforesaid objects and still others are achieved with a control device and with a valve provided in the control device according to one or more of the claims set out below.

Owing to the invention, it is possible to make a control device that permits hydraulic (in particular oil-hydraulic) driving of the piston by the operator, so that the latter is not forced to perform a physical effort to raise or lower the lid of a container. In other words, in the control device according to the invention the operator is not forced to operate the pump manually. Further, the control device according to the invention enables a frame element of the container to be raised or lowered rapidly, owing to the use of a common battery screwdriver and of a valve provided in the control device. The valve is inserted into a hydraulic circuit, in particular oil-hydraulic circuit, provided with a pair of outlets and configured for sending a pressurized operating fluid, in particular oil, to the branch of the outlet that has greater resistance than the other outlet, this outlet with greater resistance being connected to a chamber of an actuator intended for receiving the fluid for extending the stem of the actuator and thus lifting the lid of the container to which the actuator is connected.

The invention can be better understood and implemented with reference to the attached drawings that illustrate an embodiment thereof by way of non-limiting example in which:
Figure 1 is a schematic and partial frontal view of a control device according to the invention;
Figure 2 is a side view of the control device of Figure 1;
Figure 3 is a top view of the control device of Figure 1;
Figure 4 is a section of a valve comprised in the control device of Figures 1 to 3;
Figure 5 is an oil-hydraulic diagram of an embodiment of a circuit of a control device according to the invention into which the valve of Figure 4 is inserted.

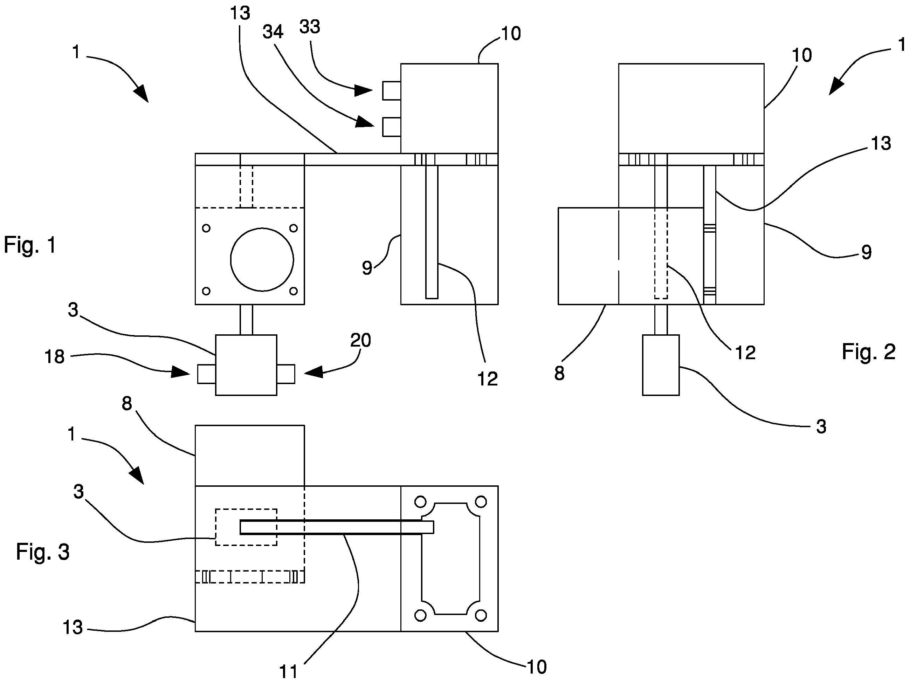

With reference in particular to Figures 1 to 3, overall with 1 a control device according to the invention has been indicated arranged for commanding the raising or lowering of a frame element, for example a lid, not shown in the Figures, of a container, or skip, which is also not illustrated in the Figures, with which the control device 1 can be associated.

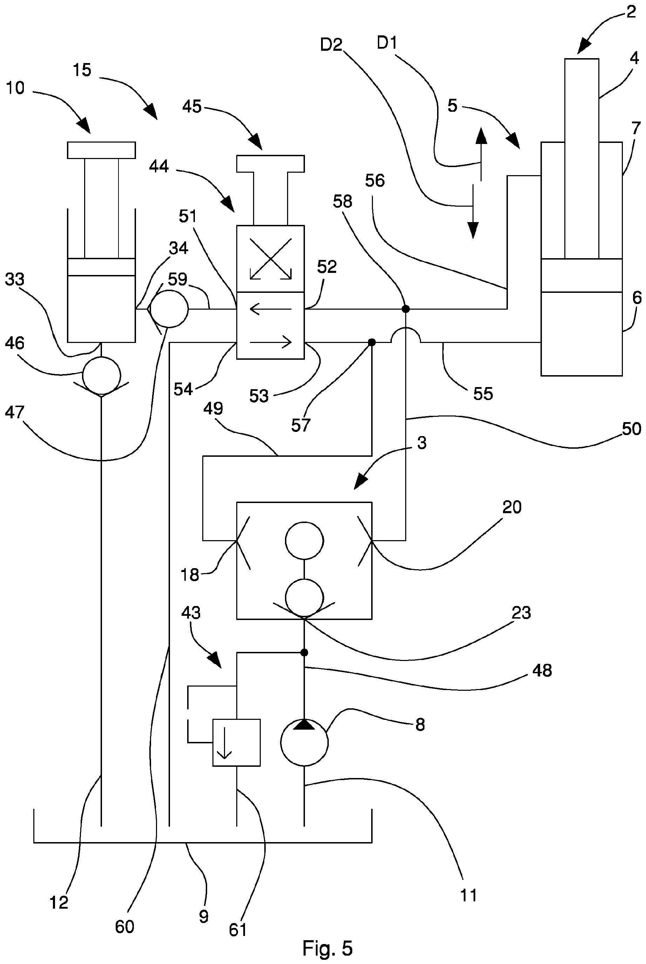

The control device 1 comprises a circuit 15 for the passage of an operating fluid and a hydraulic actuator 2, in particular a linear hydraulic actuator, intended for receiving the operating fluid to raise or lower the frame element. The circuit 15 and the actuator 2 are shown schematically in Figure 5.

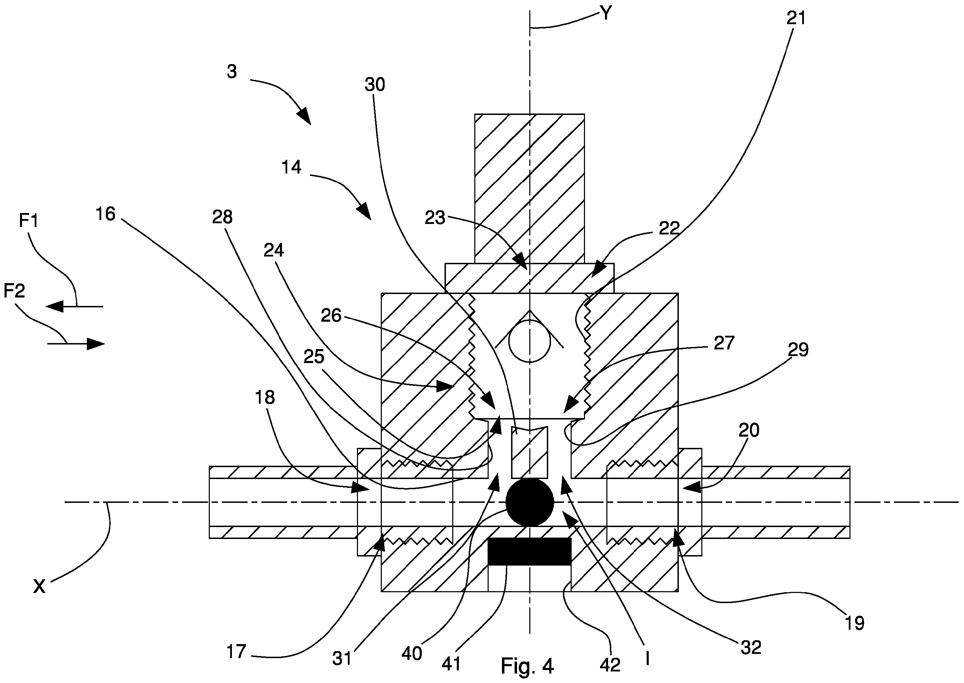

The control device 1 further comprises a valve 3, in particular a diverter valve, a section of which is shown in Figure 4, arranged for supplying the operating fluid to the actuator 2.

The container can be intended for collecting waste in waste collection centres or in a company. In use, the container is fitted removably to a base of a transport vehicle, such as a truck.

The container comprises a frame that can be made of a metal, for example ferrous metal.

The frame of the container comprises a plurality of frame elements.

The frame of the container can have a substantially parallelpipedon shape. When the frame has a substantially parallelpipedon shape, the plurality of frame elements comprises four opposite paired side walls that bound the container laterally, a base wall that bounds the container below and a cover wall, or lid, which bounds the container above, the base wall and the lid being fitted to opposite sides of the side walls.

The control device 1 is so fitted to the container as to raise or lower a wall of the latter, in particular the lid, so that the waste can be introduced into or discharged from the container. Alternatively to the lid, it is possible to provide for the control device 1 to be fitted to the container so as to move, for example by raising or lowering, a side wall of the frame of the container, for example a front wall.

The circuit 15 is connected to the actuator 2, which is configured for raising or lowering the lid, on the basis of which branches of the circuit 15 supply the actuator 2 and of which components of the control device 1 are driven.

The actuator 2 can be a dual effect actuator.

The actuator 2 can comprise a piston or stem 4 which is slidable inside a cylinder 5 and connected to the frame element.

The cylinder 5 can comprise, as in this embodiment, at least one first chamber 6, or chamber on the stem side.

The cylinder 5 can further comprise, as in this embodiment, a second chamber 7 or bottom side chamber.

The control device 1 comprises at least one supply pump 8 for supplying an operating fluid. The supply pump 8 can comprise, in particular, a hydraulic pump that is suitable for supplying the operating fluid to the actuator 2 that is used to raise or lower a frame element of a container, for example a lid.

The supply pump 8 can be a rotating gear pump.

The supply pump 8 can be driven by a screwdriver, or drill, in particular a battery-driven screwdriver or drill.

The operating fluid can be, for example, an oil provided with suitable chemical-physical features.

With the control device 1, a tank 9 is associated in which the operating fluid is arranged that is to be supplied to the actuator 2.

The valve 3 can be mounted downstream of the supply pump 8 along an advancement path of the operating fluid that from the tank 9 reaches the actuator 2 through the supply pump 8.

The control device 1 can further comprise a manual pump 10 that can supply the operating fluid to the actuator 2 alternatively to the supply pump 8.

The manual pump 10 is driven manually by an operator.

The control device 1 further comprises a first sucking tube 11, arranged for connecting the supply pump 8 to the tank 9, such that the operating fluid can be supplied to the actuator 2 by the supply pump 8.

The control device 1 can further comprise a second sucking tube 12, arranged for connecting the manual pump 10 to the tank 9, such that the operating fluid can be supplied to the actuator 2 by the manual pump 10.

The control device 1 comprises a plate 13 to which the supply pump 8 can be mounted.

The plate 13 can be placed between the manual pump 10 and the tank 9.

With reference in particular to Figure 4, the valve 3 comprises a body 14, for example made of a metal, in particular aluminium.

The body 14 can be provided with a plurality of openings through which the pressurized operating fluid can enter or exit the valve 3. The plurality of openings enables the valve 3 to be connected to the circuit 15, in particular an oil-hydraulic circuit, shown in particular in Figure 5, which enables the operating fluid to reach the actuator 2 from the tank 9.

In the body 14, a first hole 16 is obtained that extends substantially parallel to a first axis X of the valve 3. The first hole 16 comprises a first end 17 near which a first outlet 18 is obtained and a second end 19, opposite the first end 17, near which a second outlet 20 is obtained.

The first outlet 18 is connectable to the first chamber 6 of the actuator 2, such that the first chamber 6 can receive the operating fluid supplied by the supply pump 8 and the valve 3.

Supplying pressurized operating fluid to the first chamber 6 enables, in use, the stem 4 to be moved along a first direction D1, shown by an arrow in Figure 5, exiting the cylinder 5 so that the stem 4 extends from an initial rest position, which is not shown, to an operating position, which is not shown, and the frame element is raised, i.e. the container is opened.

The second outlet 20 is connectable to the second chamber 7 of the actuator 2, such that the second chamber 7 can receive the operating fluid supplied by the supply pump 8 and the valve 3.

Supplying pressurized operating fluid to the second chamber 7 enables, in use, the stem 4 to be moved along a second direction D2, opposite the first direction D1, shown by an arrow in Figure 5, entering the cylinder 5 so that the stem 4 returns from the operating position to the initial condition and the frame element is lowered, i.e. the container is shut.

A second hole 21 is further obtained in the body 14 such second hole 21 extending substantially parallel to a second axis Y of the valve 3.

The second axis Y can be substantially perpendicular to the first axis X.

The second hole 21 is flowingly connected to the first hole 16.

The second hole 21 comprises a first end portion 22 near which an inlet 23 is obtained for the operating fluid in the valve 3.

The inlet 23 is in fact connectable to the tank 9 by the supply pump 8 and the first sucking tube 11, such that the valve 3 can receive the pressurized operating fluid supplied by the supply pump 8.

The second hole 21 further comprises a second end portion 24, opposite the first end portion 22. Near the second end portion 24, a connecting opening 25 is obtained for the connection with respective first sides 26, 27 of a pair of calibrated holes, i.e. a first calibrated hole 28 and a second calibrated hole 29, these calibrated holes 28, 29 being obtained in the body 14 of the valve 3.

The first calibrated hole 28 is separated from the second calibrated hole 29 by a dividing element 30 arranged for dividing the entering operating fluid received by the inlet 23 into two portions, one for each calibrated hole 28, 29.

The calibrated hole 28 can be substantially parallel to the second axis Y.

The calibrated hole 29 can be substantially parallel to the second axis Y.

The calibrated holes 28, 29 can be reciprocally parallel.

The calibrated holes 28, 29 exit near respective second sides 31, 32, thereof opposite the sides 26, 27 in the first hole 16.

The calibrated holes 28, 29 thus enable the second hole 21 to be connected reciprocally to the first hole 16.

Owing to the second hole 21, to the calibrated holes 28, 29 and to the first hole 16, the operating fluid can move from the inlet 23 to the first outlet 18 and/or to the second outlet 20.

The first calibrated hole 28 and the second calibrated hole 29 can have a lower diameter than the diameter of the second hole 21 and/or of the first hole 16.

The first calibrated hole 28 and the second calibrated hole 29 can have substantially the same diameter, as shown in Figure 5, in order that the two portions of operating fluid have substantially the same flowrate. In one embodiment which is not shown, the first calibrated hole 28 and the second calibrated hole 29 can have a different diameter from one another.

The first outlet 18, the second outlet 20 and the inlet 23 are part of the aforesaid plurality of openings through which the pressurized operating fluid can enter or exit the valve 3. In particular, the inlet 23 enables the operating fluid to enter the valve 3, whilst the first outlet 18 and/or the second outlet 20 enable the operating fluid to exit the valve 3.

The manual pump 10 comprises a first opening 33 and a second opening 34 through which the pressurized operating fluid can respectively enter and exit the manual pump 10.

The first opening 33 is connectable to the tank 9.

The second opening 34 is connectable to the second chamber 7 of the actuator 2, such that the second chamber 7 can receive the operating fluid supplied by the manual pump 10. Also in this case, supplying pressurized operating fluid to the second chamber 7 enables, in use, the stem 4 to be moved along the second direction D2 entering the cylinder 5 so that the stem 4 returns from the operating position to the initial condition and the frame element is lowered, i.e. the container is shut.

The valve 3 further comprises a shutter element 40 arranged in the first hole 16 and movable inside the first hole 16 in a two-directional manner according to the directions indicated by the arrows F1 and F2 parallel to the first axis X to enable alternatively the first outlet 18 or the second outlet 20 of the valve 3 to be closed in use. The shutter element 40 is arranged in the first hole 16 so as to interact, for example by interference, with portions of inner walls of the first hole 16.

In particular, in use, the shutter element 40 is slid inside the first hole 16 owing to the pressure of the operating fluid between an inactive position I, shown in Figure 5, in which the shutter element 40 does not prevent the transit of the operating fluid from the first hole 16 to the first outlet 18 or to the second outlet 20, and an engaged position, not shown in the Figures, in which the shutter element 40 interacts with the portions of inner walls of the first hole 16 to prevent the transit of the operating fluid from the first hole 16 to the first outlet 18 and/or to the second outlet 20, respectively.

In the inactive position I, the shutter element 40 can be arranged inside the first hole 16 in an intermediate position between the first outlet 18 and the second outlet 20. In the embodiment of Figure 5, the shutter element 40 in the inactive position I interacts with a portion of inner wall of the first hole 16 and with a portion of wall of the dividing element 30.

Still in the embodiment of Figure 5, the shutter element 40 in the inactive position I is arranged in the centre of the first hole 16, i.e. half way along the longitudinal extent (i.e. along the first axis X) of the first hole 16.

When the shutter element 40 is in the inactive position I, the supply pump 8 is not driven and, accordingly, operating fluid does not flow into the valve 3.

In the engaged position the shutter element 40 is arranged inside the first hole 16 near the first outlet 18 or the second outlet 20 and interacts with portions of inner wall of the first hole 16 located near the first outlet 18 or the second outlet 20.

The shutter element 40 has dimensions that are such as to be able to be received inside the first hole 16. In particular, the dimensions of the shutter element 40 are chosen in function of the dimensions of the outlet 18, 20 of the valve 3 that has larger dimensions. The first hole 16 may in fact not have the same dimension along the extent along the first axis X and, accordingly, the dimensions of the first outlet 18 and the dimensions of the second outlet 20 could differ. In particular, the dimensions of the shutter element 40 are chosen so as to be able to occlude the outlet 18, 20 of the valve 3 of greater dimensions.

The shutter element 40 can substantially have the shape of a ball, as shown in the embodiment of Figure 4.

The shutter element 40 can be made of a ferromagnetic material.

The valve 3 further comprises a magnetic element 41, for example a magnet, placed in a seat 42 obtained in the body 14 to maintain the shutter element 40 in the inactive position I when the supply pump 8 is not driven, by a magnetic force. In particular, the seat 42 can be obtained in the body 14 of the valve 3 such that a longitudinal axis thereof substantially coincides, with a longitudinal axis of the portion of wall of the dividing element 30, these longitudinal axes of the seat 42 and of the portion of wall of the dividing element 30 being substantially parallel to the second axis Y. In this manner, the shutter element 40 can be maintained in a central position inside the first hole 16 in which the shutter element 40 does not interfere substantially with the passage of the operating fluid that, in use, leads from the first calibrated hole 28 and from the second calibrated hole 29 to the first hole 16.

The seat 42 can receive the magnetic element 41 in a shapingly coupled manner.

The magnetic element 41 can have a substantially parallelpipedon shape.

The seat 42 can have a substantially parallelpipedon shape.

In one embodiment that is not illustrated, instead of the magnetic element 41 an elastic element is provided, for example a spring, arranged for maintaining the shutter element 40 in the inactive position I when the supply pump 8 is not driven, by means of an elastic force. In this case, the body 14 can be made of steel.

The control device 1 can further comprise a pressure limiting valve 43, schematically shown in Figure 5, mounted in parallel to the supply pump 8, as shown in Figure 5. In particular, the pressure limiting valve 43 is connected on one hand to conduit means 48, schematically shown in Figure 5, connected between the supply pump 8 and the valve 3, and on the other hand to the tank 9.

The control device 1 can further comprise distributing valve means 44 comprising, in particular, a distributing valve of known type, for example a four way and two-position valve, i.e. a first operating position and a second operating position, schematically shown in Figure 5 in a rest position.

The distributing valve means 44 is mounted downstream of the manual pump 10 along an advancement path of the operating fluid that reaches the actuator 2 from the tank 9 through the manual pump 10. In this manner, the pressurized operating fluid, in use, can pass between the manual pump 10 and the actuator 2 through the distributing valve means 44.

The distributing valve means 44 comprises a first passage 51 arranged for connecting the distributing valve means 44 to the manual pump 10. In particular, in use, the first passage 51 enables the operating fluid coming from the manual pump 10 to enter the distributing valve means 44.

The distributing valve means 44 further comprises a second passage 52 arranged for connecting the distributing valve means 44 to the second chamber 7 of the actuator 2.

The distributing valve means 44 further comprises a third passage 53 arranged for connecting the distributing valve means 44 to the first chamber 6 of the actuator 2.

The distributing valve means 44 further comprises a fourth passage 54 arranged for connecting the distributing valve means to the tank 9. In particular, in use, the fourth passage 54 enables the operating fluid coming from the first chamber 6 of the actuator 2 to exit the distributing valve means 44 and be conveyed to the tank 9.

The manual pump 10 and the valve distributing means 44 are mounted in parallel to the supply pump 8 and to the valve 3.

The control device 1 can further comprise control means 45 arranged for driving the distributing valve means 44 in the first operating position, in which pressurized operating fluid is supplied to the first chamber 6 of the actuator 2 so as to extend the stem 4 and lift the frame element (i.e. so as to open the container) or in the second operating position in which pressurized operating fluid is supplied to the second chamber 7 of the actuator 2 so as to retract the stem 4 and lower the frame element (i.e. so as to close the container).

The control device 1 can further comprise one or more directional valves. For example, the control device 1 can comprise a first directional valve 46, of known type, arranged upstream of the manual pump 10 along the advancement path of the fluid that reaches the actuator 2 from the tank 9 through the manual pump 10.

The control device 1 can further comprise a second directional valve 47, of known type, arranged downstream of the manual pump 10 along the advancement path of the fluid that reaches the actuator 2 from the tank 9 through the manual pump 10.

With reference in particular to the Figure 5, the oil-hydraulic circuit 15 is shown, in which the valve 3 is shown inside a rectangle. It should be noted that in Figure 5 the valve 3 is shown mirrored along an axis substantially parallel to the axis X with respect to how it is shown in Figure 4.

In the circuit 15, the pressurized operating fluid flows that is supplied from the tank 9 by, alternatively, the supply pump 8 or the manual pump 10, as will be explained better below in the description.

The control device 1 can further comprise a first hydraulic line 49 connected to the first outlet 18 and intended for connecting the valve 3 to the first chamber 6 of the actuator 2.

The control device 1 further comprises a second hydraulic line 50 connected to the second outlet 20 and intended for connecting the valve 3 to the second chamber 7 of the actuator 2.

The control device 1 can further comprise a third hydraulic line 55 connected to the third passage 53 of the distributing valve means 44 and intended for connecting the manual pump 10 to the first chamber 6 of the actuator 2.

The control device 1 can further comprise a fourth hydraulic line 56 connected to the second passage 52 of the distributing valve means 44 and intended for connecting the manual pump 10 to the second chamber 7 of the actuator 2.

The third passage 53 is thus connectable to the first chamber 6 of the actuator 2 such that the first chamber 6 can receive the operating fluid supplied by the manual pump 10.

The second passage 52 is thus connectable to the second chamber 7 of the actuator 2, such that the second chamber 7 can receive the operating fluid supplied by the manual pump 10.

The first hydraulic line 49 and the second hydraulic line 50 can be connected to the third hydraulic line 55 and to the fourth hydraulic line 56, respectively. In particular, the first hydraulic line 49 leads into the third hydraulic line 55 at a first node 57, whilst the second hydraulic line 50 leads into the fourth hydraulic line 56 at a second node 58. In this manner, the actuator 2 can be supplied alternatively by the supply pump 8 by using the valve 3 or by the manual pump 10 by using the distributing valve means 44.

The control device 1 can further comprise a delivery line 59 that connects the second opening 34 of the manual pump 10 to the first passage 51 of the distributing valve means 44. In other words, the delivery line 59 is connected to the delivery of the manual pump 10.

The control device 1 can further comprise a discharge line 60 that connects the fourth passage 54 to the tank 9. In other words, the discharge line 60 enables the operating fluid coming from the first chamber 6 to return to the tank 9.

The control device 1 can further comprise a further discharge line 61 on which the pressure limiting valve 43 is fitted, connected on one side to the conduit means 48 and on the other side to the tank 9. The pressurized operating fluid passes through the pressure limiting valve 43 when the pressure of the fluid in the supply pump 8 exceeds a preset pressure value.

The operation of the control device 1 and of the valve 3 is disclosed below, with particular reference to the case in which the latter is comprised in a control device 1 having a circuit 15, in particular oil-hydraulic, like that shown in Figure 5 intended for controlling the actuator 2.

When an operator has to open the container, for example by raising a lid thereof, making use of the valve 3, the manual pump 10 is not driven by the operator, whilst the operator drives the supply pump 8, for example by a screwdriver equipped by a suitable joint.

The operator further drives the control means 45, such that the latter takes the distributing valve means 44 to the first operating position that enables pressurized operating fluid to be supplied to the first chamber 6.

At the moment of driving the supply pump 8 and driving the distributing valve means 44 in the first operating position, the shutter element 40 is in the inactive position I.

The pressurized operating fluid is supplied to the valve 3 by the supply pump 8. In particular, the pressurized operating fluid enters the valve 3 through the inlet 23 and from here flows into the second hole 21. At this point, in an initial step of supply pump 8 driving, the pressurized operating fluid is divided and conveyed both to the first calibrated hole 28, and to the second calibrated hole 29 and from here to both the outlets 18, 20.

Subsequently, the pressurized operating fluid is conveyed to just one of the outlets 18, 20 of the valve 3, in particular to the first outlet 18, because the shutter element 40 is pushed by the pressurized operating fluid entering the inlet 23 to the engaged position and thus closes the outlet 18, 20 of the valve 3 connected to a node of the circuit 15 that has less pressure. In fact, the pressure at the second node 58 is lower than the pressure at the first node 57, because the manual pump 10 is not started up. The thrust force of the fluid that enters the valve 3 through the inlet 23 exceeds the magnetic force between the shutter element 40 and the magnetic element 41. This accordingly causes a movement of the shutter element 40 to the second outlet 20, thus shutting the passage. This is because the pressure at the second outlet 20 connected to the second node 58 is less than the pressure at the first outlet 18 connected to the first node 57.

Following closing of the second outlet 20 by the shutter element 40 the pressurized operating fluid then exits the valve 3 only through the first outlet 18, i.e. the outlet of the valve 3 connected to the first node 57 of the circuit 15 that has greater resistance (i.e. greater counterpressure). The first node 57 is connected to the first chamber 6 and, accordingly, the pressurized operating fluid is supplied to the latter. The increase in volume of pressurized operating fluid in the first chamber 6 pushes the stem 4 along the first direction D1 so as to extend and raise the frame element (i.e. so as to open the container).

When the operator has to shut the container, for example by lowering a lid thereof, making use of the valve 3, the manual pump 10 is not driven by the operator, whilst the operator drives the supply pump 8, for example by a screwdriver equipped by a suitable joint.

The operator further drives the control means 45 such that the latter takes the distributing valve means 44 to the second operating position that enables the pressurized operating fluid to be supplied from the second chamber 7 to the tank 9.

At the moment of driving the supply pump 8 and driving the distributing valve means 44 in the second operating position, the shutter element 40 is in the engaged position in which interacts with the portions of inner walls of the first hole 16 to prevent the transit of the operating fluid from the first hole 16 to the second outlet 20. The pressurized operating fluid supplied to the valve 3 by the supply pump 8 then enters the inlet 23 and exits the first outlet 18.

Subsequently, the shutter element 40 is pushed by the pressurized operating fluid entering the inlet 23 to close the first outlet 18 of the valve 3 connected to the first node 57 of the circuit 15, which in this case has less pressure than the second node 58 connected to the second outlet 20.

Following closing of the first outlet 18 by the shutter element 40, the pressurized operating fluid then exits the valve 3 only through the second outlet 20, i.e. the outlet of the valve 3 connected to the second node 58 of the circuit 15 that has greater resistance (i.e. greater counterpressure). The second node 58 is connected to the second chamber 7 and, accordingly the pressurized operating fluid is supplied to the latter. The increase in volume of pressurized operating fluid in the second chamber 7 pushes the stem 4 along the second direction D2 so as to retract and lower the frame element (i.e. so as to close the container). Further, the stem 4 pushes part of the pressurized operating fluid present in the first chamber 6 to exit the first chamber 6 and reach the tank 9 into which it is discharged.

Once driving of the supply pump 8 ceases, the shutter element 40 returns to the inactive position I attracted by the magnetic element 41 because pressurized operating fluid no longer circulates in the valve 3.

Both when an operator has to open the container and when the operator has to shut the container, the pressurized operating fluid is passed through the pressure limiting valve 43 to be discharged into the tank 9 when the pressure of the pressurized operating fluid in the supply pump 8 exceeds a preset pressure value.

What is disclosed above is a dual effect drive of the actuator 2 effected by means of the supply pump 8 and of the valve 3.

On the other hand, the operation is disclosed below of the control device 1 when the valve 3 is not used, i.e. the drive of the actuator 2 is exclusively manual or single effect.

This manual drive is alternative to the use of the valve 3.

When an operator has to open the container, for example by raising a lid thereof, without using the valve 3, the operator drives the manual pump 10, whereas the supply pump 8 is not started up.

The operator further so drives the control means 45 that the latter takes the distributing valve means 44 to the first operating position that enables pressurized operating fluid to be supplied to the first chamber 6.

The pressurized operating fluid is removed from the tank 9 by the drive of the manual pump 10 and supplied to the first chamber 6 of the actuator 2, where the increase in volume of pressurized operating fluid in the first chamber 6 pushes the stem 4 along the first direction D1 so as to extend and raise the frame element (i.e. so as to open the container).

When the operator has to shut the container, for example by lowering a lid thereof, without using the valve 3, the operator so drives the control means 45 that the latter takes the distributing valve means 44 to the second operating position that enables the pressurized operating fluid to be supplied from the second chamber 7 to the tank 9 and prevents the supply of pressurized operating fluid to the first chamber 6.

The operating fluid present in the first chamber 6 exits the first chamber 6 because of the fact that the first node 57 is piloted to discharge by the distributing valve means 44.

Accordingly, the stem 4 moves along the second direction D2 so as to retract and lower the frame element (i.e. so as to close the container), pushing the pressurized operating fluid present in the first chamber 6 to exit the first chamber 6 and reach the tank 9 into which it is discharged.

The control device 1, owing to the conformation of the valve 3 and to the arrangement thereof inside the circuit 15, enables the physical force to be eliminated that is associated with the manual drive of an actuator 2 to raise a frame element. Accordingly, the control device 1 according to the invention permits easy driving of the actuator 2 by an operator.

The supply pump 8 and the valve 3 that avoid the fatigue associated with the manual drive are nevertheless mounted in parallel to the manual pump 10. This thus enables also the manual pump 10 to be used to drive the actuator 2 manually, for example in the event of a fault in the supply pump 8 and/or the valve 3. Further, this enables constructional adaptations to the control devices associated with already existing containers not to be needed and accordingly permits simple and cheap installation on the control devices associated with containers of known type.

Further, owing to the conformation of the valve 3, the control device 1 enables rapid raising/lowering of a frame element of the container with which the control device is associated.

## Claims

1. Control device (1) arranged for controlling the raising or lowering of a frame element of a container, said control device (1) comprising a circuit (15) for the passage of an operating fluid, an actuator (2) arranged for receiving said operating fluid to raise or lower said frame element, and a valve (3) arranged for supplying said operating fluid to a first chamber (6) or to a second chamber (7) of said actuator (2) to extend or retract a stem (4) of said actuator (2) so as to raise or lower said frame element to which said stem (4) is connected, said control device (1) further comprising a supply pump (8) arranged for supplying said pressurized operating fluid to said valve (3) from a tank (9), said circuit (15) comprising conduit means (48), arranged for connecting said valve (3) to said supply pump (8), a first hydraulic line (49) connected to a first outlet (18) of said valve (3) and intended for connecting said valve (3) to said first chamber (6) of said actuator (2) and a second hydraulic line (50) connected to a second outlet (20) of said valve (3) and intended for connecting said valve (3) to said second chamber (7) of said actuator (2), said control device (1) further comprising distributing valve means (44) connected to said first chamber (6) by a third hydraulic line (55) and to said second chamber (7) by a fourth hydraulic line (56) and a manual pump (10) connected to said distributing valve means (44), said control device (1) being **characterized in that** said manual pump (10) and said valve distributing means (44) are mounted in parallel to said supply pump (8) and to said valve (3), said first hydraulic line (49) leading into said third hydraulic line (55) and said second hydraulic line (50) leading into said fourth hydraulic line (56), said valve (3) comprising:
- a body (14) in which a first hole (16) is obtained comprising a first end (17) near which said first outlet (18) is obtained, and a second end (19), opposite said first end (17), near which said second outlet (20) is obtained, said first outlet (18) and said second outlet (20) enabling said pressurized operating fluid to exit said valve (3), said first outlet (18) being connectable to said first chamber (6) of said actuator (2) in order that said first chamber (6) can receive said pressurized operating fluid so as to extend said stem (4) of said actuator (2) so as to raise said frame element of said container and said second outlet (20) being connectable to said second chamber (7) of said actuator (2) in order that said second chamber (7) can receive said pressurized operating fluid so as to retract said stem (4) of said actuator (2) so as to lower said frame element of said container;
- in said body (14) a second hole (21) being further obtained that is connected to said first hole (16) and comprising a first end portion (22) near which an inlet (23) is obtained that enables said pressurized operating fluid to enter said valve (3),
said valve (3) further comprising
- a shutter element (40) arranged inside said first hole (16) and movable therein between an inactive position (I) in which said shutter element (40) does not prevent the passage of said operating fluid from said first hole (16) to said first outlet (18) and/or to said second outlet (20) and an engaged position in which it alternatively occludes said first outlet (18) or said second outlet (20) coupling with portions of inner walls of said first hole (16) arranged near said first outlet (18) or said second outlet (20).

2. Control device (1) according to claim 1, wherein said valve (3) further comprises a first calibrated hole (28) and a second calibrated hole (29) obtained in said body (14) and comprising respective first sides (26, 27), arranged for connecting said first calibrated hole (28) and said second calibrated hole (29) to a connecting opening (25) of said second hole (21), and respective second sides (31, 32), reciprocally opposite said first sides (26, 27), leading into said first hole (16) to connect reciprocally said second hole (21) to said first hole (16).

3. Control device (1) according to claim 2, wherein said first calibrated hole (28) is separated from said second calibrated hole (29) by a dividing element (30) arranged for dividing said operating fluid received entering said valve (3) from said inlet (23) into two portions, one for each of said first calibrated hole (28) and of said second calibrated hole (29).

4. Control device (1) according to claim 3, wherein said first calibrated hole (28) and said second calibrated hole (29) have a diameter that is substantially the same in order for said two portions of operating fluid to have substantially the same flowrate.

5. Control device (1) according to one of claims 2 to 4, wherein said first calibrated hole (28) and said second calibrated hole (29) have a diameter lower than a diameter of said second hole (21) and/or of said first hole (16).

6. Control device (1) according to one of claims 2 to 5, wherein said first calibrated hole (28) and said second calibrated hole (29) are reciprocally parallel.

7. Control device (1) according to any preceding claims, wherein said first hole (16) extends substantially parallel to a first axis (X) of said valve (3) and said second hole (21) extends substantially parallel to a second axis (Y) of said valve (3), said second axis (Y) being substantially perpendicular to said first axis (X), said shutter element (40) being movable inside said first hole (16) along directions (Fl) and (F2) substantially parallel to said first axis (X).

8. Control device (1) according to claim 7, as claim 7 is appended to claim 2, wherein said first calibrated hole (28) is substantially parallel to said second axis (Y) and said second calibrated hole (29) is substantially parallel to said second axis (Y).

9. Control device (1) according to claim 7 or 8, wherein the dimensions of said shutter element (40) are chosen in function of the dimensions of said first outlet (18) and of said second outlet (20).

10. Control device (1) according to any preceding claims, wherein said shutter element (40) is a ball.

11. Control device (1) according to one of the preceding claims, wherein said valve (3) further comprises a magnetic element (41) or an elastic element arranged for maintaining said shutter element (40) in said inactive position (I) by means of a magnetic force or by means of an elastic force.

12. Control device (1) according to one of the preceding claims, wherein said distributing valve means (44) is pilotable by control means (45) between a first operating position, in which said pressurized operating fluid is suppliable to said first chamber (6) of said actuator (2) so as to move said stem (4) along a first direction (D1) and a second operating position in which said pressurized operating fluid is suppliable to said second chamber (7) of said actuator (2) so as to move said stem (4) along a second direction (D2) opposite said first direction (D1).

13. Control device (1) according to claim 12, and further comprising a discharge line (60) arranged for connecting said distributing valve means (44) to said tank (9) to enable said operating fluid coming from said first chamber (6) to be discharged into said tank (9).

14. Control device (1) according to claim 13, and further comprising a further discharge line (61) to which a pressure limiting valve (43) is fitted, connected on one side to said conduit means (48) and on the other to said tank (9), said pressurized operating fluid passing through said pressure limiting valve (43) when the pressure of the fluid in said supply pump (8) exceeds a preset pressure value.

15. Control device (1) according to one of the preceding claims, and further comprising a first sucking tube (11), arranged for connecting said supply pump (8) to said tank (9), such that said pressurized operating fluid can be supplied to said actuator (2) by said supply pump (8).

16. Control device (1) according to one of the preceding claims, and further comprising a second sucking tube (12), arranged for connecting said manual pump (10) to said tank (9), such that said pressurized operating fluid can be supplied to said actuator (2) by said manual pump (10).

17. Control device (1) according to one of the preceding claims, wherein said supply pump (8) is drivable by a battery screwdriver.
